# EUROPÄISCHE PATENTSCHRIFT

(11) **EP 2 501 966 B1**
(45) Veröffentlichungstag und Bekanntmachung des Hinweises auf die Patenterteilung: **27.01.2016**
(21) Anmeldenummer: 10778995.0
(22) Anmeldetag: 09.11.2010
(51) Int. Cl.: F16K 31/04, F02B 37/18

(54) **STELLVORRICHTUNG UND VERWENDUNG**
ACTUATING DEVICE AND USE THEREOF
DISPOSITIF D'ACTIONNEMENT ET SON UTILISATION

(30) Priorität: 18.11.2009 DE 102009053829
(43) Veröffentlichungstag der Anmeldung: 26.09.2012
(73) Patentinhaber: Mahle International GmbH, 70376 Stuttgart (DE)
(72) Erfinder: WEBER, Thomas, 73650 Winterbach (DE)
(74) Vertreter: BRP Renaud & Partner mbB Rechtsanwälte Patentanwälte Steuerberater
(86) Internationale Anmeldenummer: PCT/EP2010/067103
(87) Internationale Veröffentlichungsnummer: WO 2011/061095

(56) Entgegenhaltungen:
- CN-Y- 201 187 584
- DE-U1-202009 002 291
- US-A1- 2007 256 747
- US-A1- 2009 020 717

## Beschreibung

Die vorliegende Erfindung betrifft eine Stellvorrichtung zum bidirektionalen betätigen eines Stellglieds, insbesondere in einem Kraftfahrzeug. Die Erfindung betrifft außerdem eine Verwendung einer solchen Stellvorrichtung. Ferner betrifft die Erfindung eine Brennkraftmaschine, insbesondere in einem Kraftfahrzeug, die mit einer solchen Stellvorrichtung ausgestattet ist.

Stellvorrichtungen dieser Art können beispielsweise bei Brennkraftmaschinen, insbesondere in Kraftfahrzeugen, zur Anwendung kommen, wie zum Beispiel in den Dokumenten US2009/0020717, CN201187584Y und US2007/0256747 offenbart. Sie finden dort Verwendung z.B. zum Betätigen eines Wastegates einer Turbine eines Abgasturboladers oder zum Betätigen einer variablen Geometrie eines Abgasturboladers. Ferner können sie auch zum Betätigen eines Abgasventils oder eines Abgasrückführventils oder eines Frischluftventils oder einer sonstigen, insbesondere frischluftseitigen oder abgasseitigen, Klappenanordnung verwendet werden.

Typischerweise umfasst eine derartige Stellvorrichtung einen Stellantrieb sowie eine Kopplungseinrichtung, die antriebsseitig mit dem Stellantrieb zur Durchführung bidirektionaler Stellbewegungen gekoppelt ist und abtriebsseitig zur Kopplung mit dem bidirektional zu betätigenden Stellglied ausgestaltet ist. Der Begriff "bidirektional" umfasst dabei sowohl Linearbewegungen als auch Drehbewegungen, jeweils in beiden Richtungen, insbesondere um das jeweilige Stellglied zwischen zwei Endstellungen verstellen zu können. Zweckmäßig kann hierzu die Kopplungseinrichtung antriebsseitig ein Antriebselement ausweisen, das mit dem Stellantrieb gekoppelt ist, während sie abtriebsseitig ein Abtriebselement aufweist, das mit dem Stellglied koppelbar ist und das über ein Gelenk mit dem Antriebselement gekoppelt ist, um in einer Längsachse Zug- und Druckkräften übertragen zu können, wie zum Beispiel in Dokument DE202009002291 U1 offenbart.

Durch diese gelenkige Verbindung zwischen Antriebselement und Abtriebselement können toleranzbedingte Lageabweichungen zwischen den linearen Stellbewegung des Stellantriebs und der linearen Stellbewegung des Stellglieds ausgeglichen werden. Beispielsweise kann ein derartiges Gelenk als Kugelkopfgelenk ausgestaltet sein, das einen am Abtriebselement ausgebildeten Kugelkopf aufweist, der in einer am Antriebselement ausgebildeten Kugelkopflagerung in beliebiger Richtung drehbar gelagert ist.

Die vorliegende Erfindung beschäftigt sich mit dem Problem, für eine Stellvorrichtung der eingangs genannten Art beziehungsweise für eine damit ausgestattete Brennkraftmaschine beziehungsweise für eine zugehörige Verwendung eine verbesserte oder zumindest eine andere Ausführungsform anzugeben, die sich insbesondere durch eine preiswerte Herstellbarkeit und/oder durch einen verbesserten Toleranzausgleich auszeichnen.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, das Gelenk so auszugestalten, dass es zwei Bewegungsfreiheitsgrade ausweist, nämlich einen ersten Bewegungsfreiheitsgrad, der zwischen dem Antriebselement und dem Abtriebselement Schwenkbewegungen um eine im Gelenk quer zur Längsachse verlaufende Querachse ermöglicht, und einen zweiten Bewegungsfreiheitsgrad, der zwischen dem Antriebselement und dem Abtriebselement im Gelenk Linearbewegungen parallel zur Querachse ermöglicht. Durch die Schwenkbarkeit des Gelenks kann das Abtriebselement einer vorgegebenen Kinematik des Stellglieds folgen. Durch die lineare Verschiebbarkeit lässt sich ein toleranzbedingter Versatz zwischen der optimalen Ausrichtung des Abtriebselements und der durch die Montage der Stellvorrichtung vorgegebenen Ausrichtung des Antriebselements ausgleichen.

Das Gelenk ist als Zylinderkopfgelenk ausgestaltet, dessen Zylinderlängsachse quer zur Längsachse bzw. parallel zur Querachse orientiert ist. Ein derartiges Zylinderkopfgelenk lässt sich besonders preiswert realisieren.

Das Zylinderkopfgelenk weist einen am Abtriebselement oder am Antriebselement ausgebildeten Zylinderkopf auf, der in einem am Antriebselement oder am Abtriebselement ausgebildeten Zylinderlager um die Querachse verschwenkbar und in der Querachse verschiebbar gelagert ist. Auf diese Weise lassen sich die beiden Bewegungsfreiheitsgrade konstruktiv einfach realisieren.

Das Antriebselement kann bei einer besonders preiswerten Weiterbildung zwei Halbschalen aufweisen, die jeweils eine Lagerhalbschale umfassen, die zusammen das Zylinderlager bilden.

Gemäß einer anderen Ausführungsform kann das Antriebselement eine zylindrische Außenkontur aufweisen und in einer Lagerbuchse in der Längsachse des Antriebselements bidirektional verstellbar und um die Längsachse des Antriebselements drehbar gelagert sein. Durch die Drehbarkeit des Antriebselements um seine Längsachse wird die Kopplung zwischen Stellantrieb und Stellglied mit einem weiteren Freiheitsgrad ausgestattet, wodurch es vereinfacht wird, Toleranzen auszugleichen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine teilweise geschnittene, perspektivische Ansicht einer Stellvorrichtung,
- Fig. 2: eine perspektivische Schnittansicht der Stellvorrichtung im Bereich einer Kopplungseinrichtung,
- Fig. 3: eine perspektivische Ansicht der Stellvorrichtung im Bereich der Kopplungseinrichtung in auseinandergezogener Darstellung.

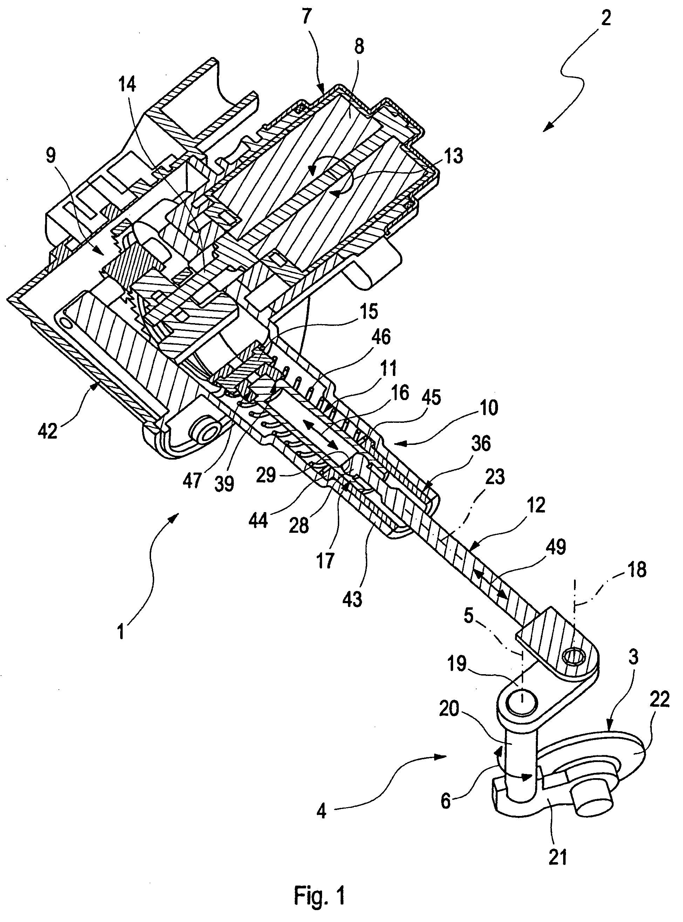

Entsprechend Fig. 1 kann ein nur im Bereich einer Stellvorrichtung 1 dargestelltes Kraftfahrzeug 2 ein Stellglied 3 aufweisen. Das Stellglied 3 kann beispielsweise ein Bestandteil eines, im Übrigen nicht dargestellten, Wastegates 4 einer Turbine eines Abgasturboladers sein. Beispielsweise ist das Stellglied 3 als Ventilklappe ausgestaltet, um einen die Turbine umgehenden Bypass, nämlich das Wastegate, zu steuern. Ebenso kann es sich beim Stellglied 3 um ein Abgasventil oder um ein Frischluftventil oder um ein Abgasrückführventil handeln. Generell sind als Stellglied 3 auch andere Klappenanordnungen denkbar, die insbesondere frischluftseitig angeordnet sein können. Bei einer anderen Ausführungsform kann das Stellglied 3 auch einen Bestandteil einer variablen Geometrie eines Abgasturboladers der Brennkraftmaschine 2 bilden. Beispielsweise lassen sich über die Betätigung des Stellglieds 3 Leitschaufeln am Einlass einer Turbine oder am Auslass eines Verdichters hinsichtlich ihres Anstellwinkels einstellen.

Die Stellvorrichtung 1 dient also zum Betätigen des Stellglieds 3, wobei die Stellvorrichtung 1 zum Durchführen bidirektionaler Betätigungsvorgänge ausgestaltet ist. Im Beispiel ist das Stellglied 3 um eine Rotationsachse 5 drehbar angeordnet. Die bidirektionale Betätigung des Stellglieds 3 bewirkt somit Drehbewegungen entsprechend eines Drehbewegungspfeils 6 in entgegengesetzten Drehrichtungen. Ebenso sind auch lineare Verstellbewegungen für ein entsprechendes anderes Stellglied 3 denkbar.

Die Stellvorrichtung 3 umfasst einen Stellantrieb 7, der im Beispiel einen Antriebsmotor 8 und ein Getriebe 9 umfasst. Der Antriebsmotor 8 ist bevorzugt als Elektromotor ausgestaltet. Grundsätzlich kann es sich auch um einen Hydraulikmotor oder um einen Pneumatikmotor handeln.

Die Stellvorrichtung 1 weist außerdem eine Kopplungseinrichtung 10 auf. Diese ist antriebsseitig mit dem Stellantrieb 7 zur Durchführung bidirektionaler Stellbewegungen gekoppelt. Abtriebsseitig ist die Kopplungseinrichtung 10 zur Kopplung mit dem bidirektional zu betätigenden Stellglied 3 ausgestaltet. Hierzu weist die Kopplungseinrichtung 10 antriebsseitig ein Antriebselement 11 und abtriebsseitig ein Abtriebselement 12 auf. Das Antriebselement 11 ist mit dem Stellantrieb 7 gekoppelt. Im Beispiel ist das Antriebselement 11 direkt mit dem Getriebe 9 gekoppelt und über das Getriebe 9 mit dem Antriebsmotor 8 indirekt gekoppelt. Der Antriebsmotor 8 erzeugt eine Drehbewegung 13, die er über eine Ausgangswelle 14 in das Getriebe 9 einleitet. Das Getriebe 9 ist so ausgestaltet, dass es eine eingehende Drehbewegung in eine Linearbewegung 16 umwandelt. Dementsprechend wird die vom Antriebsmotor 8 erzeugte bidirektionale Drehbewegung 13 an einem ausgangsseitigem Abtriebsglied 15 des Getriebes 9 in eine bidirektionale Linearbewegung 16 transformiert. Diese wird vom Abtriebsglied 15 auf das Antriebselement 11 übertragen und von diesem über ein Gelenk 17 auf das Abtriebselement 12 übertragen. Die bidirektionale Linearverstellung des Abtriebsglieds 12 ist dabei mit 49 bezeichnet.

Das Abtriebselement 12 ist im gezeigten montierten Zustand mit dem Stellglied 3 gekoppelt. Im Beispiel ist das Abtriebselement 12 um eine Schwenkachse 18 gelenkig an einem Betätigungsarm 19 gelagert, der drehfest mit einer Betätigungswelle 20 verbunden ist, die um die zuvor genannte Rotationsachse 5 des Stellglieds 3 beweglich gelagert ist. Die Welle 20 ist außerdem über einen Kopplungsarm 21 mit dem Ventilkörper 22 des Stellglieds 3 verbunden. Letztlich wird die Linearbewegung 17 des Abtriebsglieds 12 über die hier gezeigte Kopplung in die Drehbewegung 6 des Stellglieds 3 transformiert.

Das Abtriebselement 12 ist über das Gelenk 17 mit dem Antriebselement 11 zur Übertragung von Zugkräften sowie von Druckkräften gekoppelt, und zwar jeweils in einer Längsachse 23. Im Beispiel handelt es sich um die Längsachse 23 des Abtriebselements 12. Das Abtriebselement 12 ist beispielsweise stabförmig ausgestaltet und erstreckt sich in der Längsachse 23.

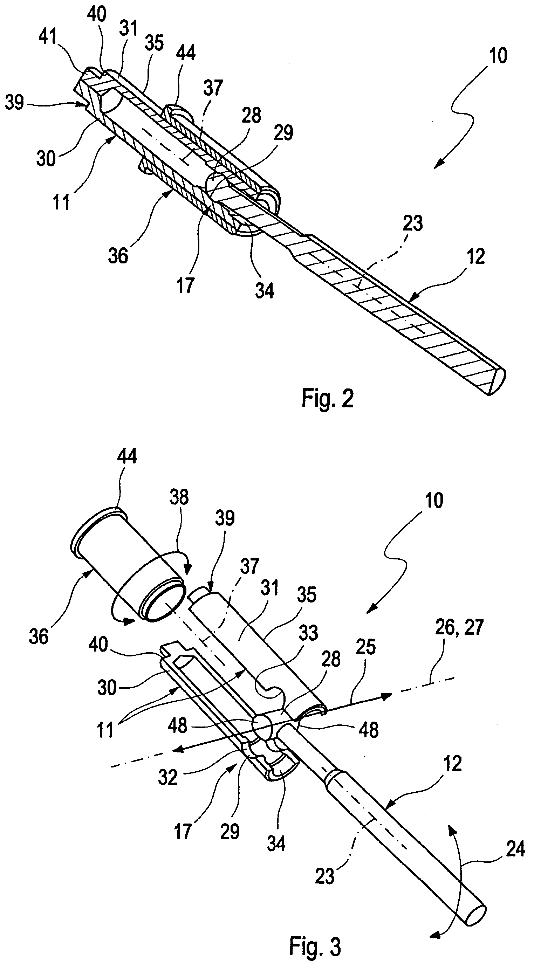

Das Gelenk 17 ist so ausgestaltet, dass es zwischen dem Antriebselement 11 und dem Abtriebselement 12 einerseits in Fig. 3 angedeutete Schwenkbewegungen 24 und andererseits ebenfalls in Fig. 3 dargestellte Linearbewegungen 25 ermöglicht. Die Schwenkbewegungen 24 erfolgen dabei um eine im Gelenk 17 quer zur Längsachse 23 verlaufende Querachse 26, während die Linearbewegungen parallel zur Querachse 26 und koaxial zur Querachse 26 erfolgen. Dementsprechend liegt der die Linearbewegungen 25 repräsentierende Doppelpfeil in Fig. 3 auf der Querachse 26.

Entsprechend den Fig. 1 bis 3 ist das Gelenk 17 entsprechend der hier vorgestellten, bevorzugten Ausführungsform als Zylinderkopfgelenk ausgestaltet, das im Folgenden ebenfalls mit 17 bezeichnet wird. Das Zylinderkopfgelenk 17 weist eine Zylinderlängsachse 27 auf, die mit der Querachse 26 zusammenfällt beziehungsweise koaxial zur Querachse 26 orientiert ist. Das Zylinderkopfgelenk 17 weist einen Zylinderkopf 28 und ein Zylinderlager 29 auf. Der Zylinderkopf 28 ist bei der hier gezeigten Ausführungsform am Abtriebselement 12 ausgebildet, während das Zylinderlager 29 am Antriebselement 11 ausgebildet ist. Denkbar ist auch eine umgekehrte Bauweise, bei welcher der Zylinderkopf 28 am Antriebselement 11 ausgebildet ist, während dann das Zylinderlager 29 am Abtriebselement 12 ausgebildet ist.

Der Zylinderkopf 28 ist im Zylinderlager 29 um die Querachse 26 verschwenkbar und außerdem in der Querachse 26 verschiebbar gelagert, wodurch einerseits die Schwenkbewegungen 24 und andererseits die Linearbewegungen 25 ermöglicht werden.

Im gezeigten bevorzugten Beispiel weist das Antriebselement 11 zwei Halbschalen 30, 31 auf, die zusammen das Antriebselement 11 bilden. Jede Halbschale 30, 31 weist eine Lagerhalbschale 32, 33 auf, die zusammen das Zylinderlager 29 bilden. Insoweit ist eine Teilungsebene, in der die beiden Halbschalen 30, 31 aneinander liegen, so gewählt, dass darin die Zylinderlängsachse 27 beziehungsweise die Schwenkachse 26 liegt. Bei koaxialer Ausrichtung von Antriebselement 11 und Abtriebselement 12 liegt in dieser Teilungsebene auch die Längsachse 23.

Das Antriebselement 11 besitzt eine Durchgangsöffnung 34. Diese mündet in das Zylinderlager 29 ein und ist in der Längsrichtung 23 orientiert. Durch die Durchgangsöffnung 34 erstreckt sich das Abtriebselement 12 bis zum Zylinderkopf 28, der im Zylinderlager 29 gelagert ist. Die Durchgangsöffnung 34 ist dabei so dimensioniert, dass sie einerseits die Schwenkbewegungen 24 und andererseits die Verschiebebewegungen 25 zwischen Antriebselement 11 und Abtriebselement 12 zulässt. Insbesondere ist daher eine Öffnungsweite der Durchgangsöffnung 34 größer als ein Außenquerschnitt des Abtriebselements 12, in dem die Durchgangsöffnung 34 durchsetzenden Bereich. Bei der hier gezeigten Schalenbauweise des Antriebselements 11 ist die Durchgangsöffnung 34 hälftig an den beiden Schalen 30, 31 ausgeformt.

Das Antriebselement 11 besitzt, insbesondere im montierten Zustand, eine zylindrische Außenkontur 35, die in einer zylindrischen Lagerbuchse 36 gelagert ist. Dabei ist das Antriebselement 11 einerseits in seiner Längsachse 37 bidirektional in der Lagerbuchse 36 verschiebbar gelagert. Andererseits ist das Antriebselement 11 um seine Längsachse 37 in der Lagerbuchse 36 drehbar gelagert. Eine entsprechende Drehverstellbarkeit ist in Fig. 3 durch einen Doppelpfeil angedeutet und mit 38 bezeichnet. Hierdurch erhält die Kopplungseinrichtung 10 im montierten Zustand einen zusätzlichen Bewegungsfreiheitsgrad, nämlich die Drehbarkeit 38 um die Längsachse 37 des Antriebselements 11.

Um diese zusätzliche Drehbarkeit 38 der gesamten Kopplungseinrichtung 10 realisieren zu können, ist das Antriebselement 11 entsprechend drehbar mit dem Antriebsglied 15 des Stellantriebs 7 beziehungsweise des Getriebes 9 gekoppelt.

Hierzu weist das Antriebselement 11 in seinem vom Abtriebselement 12 entfernten Ende ein Axiallager 39 auf. Insbesondere ist besagtes distales Ende als Axiallager 39 ausgestaltet. An diesem Axiallager 39 stützt sich das Antriebsglied 15 des Stellantriebs 7 beziehungsweise des Getriebes 9 in der Längsachse 37 des Antriebselements 11 ab, wobei es außerdem um die Längsachse 37 drehbar abgestützt ist. Beispielsweise umfasst das Axiallager 39 eine Ringstufe 40, die am Antriebselement 11 ausgeformt ist. Bei der hier vorgestellten Schalenbauweise besitzen die beiden Halbschalen 30,31 jeweils eine halbe Ringstufe 40 und somit jeweils ein halbes Axiallager 39, sowie einen halben Lagerzapfen 41. Ferner umfasst das Axiallager 39 einen zentralen Lagerzapfen 41, der sich koaxial zur Längsachse 37 des Antriebselements 11 erstreckt.

Entsprechend Fig. 1 umfasst die Stellvorrichtung 1 ein Gehäuse 42 zur Aufnahme des Stellantriebs 7. Dementsprechend nimmt das Gehäuse 42 den Antriebsmotor 8 und das Getriebe 9 auf. Außerdem nimmt das Gehäuse 42 die Kopplungseinrichtung 10 auf. Insbesondere weist das Gehäuse 42 einen an die Ausgangsseite des Getriebes 9 anschließenden Ausgangsbereich 43 auf, in dem das Antriebselement 11 bidirektional verstellbar angeordnet ist und der die Lagerbuchse 36 aufnimmt. Beispielsweise ist die Lagerbuchse 36 im Verstellabschnitt 43 des Gehäuses 42 über einen Bund 44 an einer entsprechenden Ringstufe 45 des Gehäuses 42 abgestützt. In diesem Verstellbereich 43 ist entsprechend Fig. 1 außerdem eine Rückstellfeder 46 untergebracht, die sich einerseits über den Bund 44 an der Lagerbuchse 36 und andererseits am Antriebsglied 15 des Stellantriebs 7 beziehungsweise des Getriebes 9 abstützt. Das bedeutet, dass die Rückstellfeder 46 nicht das Antriebselement 11 in eine Ausgangsstellung vorspannt, sondern das Antriebsglied 15. Bevorzugt wird daher für das Axiallager 39 eine Kopplung 47 die auch eine Zugkraftübertragung ermöglicht. Beispielsweise kann diese Kopplung 47 als Klipsverbindung ausgestaltet sein, die eine Drehung um die Längsachse 37 des Antriebselements 11 zulässt. Diese Klipsverbindung bzw. diese Kopplung 47 kann am Lagerzapfen 41 realisiert sein, wodurch Kopplung 47 und Axiallager 39 eine integrale Einheit bilden.

Der Zylinderkopf 28 kann grundsätzlich separat vom Abtriebselement 12 hergestellt sein. Entsprechend kann der Zylinderkopf 28 auf geeignete Weise am Abtriebselement 12 montiert sein. Alternativ ist auch integrale Bauweise denkbar, bei welcher der Zylinderkopf 28 integral am Abtriebselement 12 ausgeformt ist.

Für die Materialien, aus denen der Zylinderkopf 28 und das Zylinderlager 29 hergestellt sind, können reibungsoptimierte Materialpaarungen verwendet werden, die insbesondere unterschiedliche Abriebsfestigkeiten aufweisen. Denkbar sind beispielsweise folgende Materialpaarungen, wobei jeweils das erstgenannte Material der Lagerschale 29 zugeordnet ist, während das jeweils zweitgenannte Material dem Zylinderkopf 28 zugeordnet ist:
Edelstahl - Edelstahl mit Teflonbeschichtung,
Edelstahl - Messing oder Bronze,
Metall mit Gleitschicht - Metall mit oder ohne Gleitschicht,
Kunststoff mit Teflonfüllung - Kunststoff mit Teflonfüllung,
Metall - Kunststoff,
Kunststoff - Metall.

Da das Zylinderlager 29 insbesondere integral am Antriebselement 11 ausgeformt ist, ergibt sich für das jeweilige Antriebselement 11 eine entsprechende Materialauswahl. Entsprechendes gilt dann auch für das Abtriebselement 12, sofern der Zylinderkopf 28 daran integral ausgeformt ist.

Der Zylinderkopf 28 besitzt zwei voneinander abgewandte Stirnseiten 48, die entsprechend einer bevorzugten Ausführungsform bezüglich der Längsachse 23 des Abtriebselements 12 nach außen konvex gekrümmt sein können.

## Patentansprüche

1. Stellvorrichtung zum bidirektionalen betätigen eines Stellglieds (3), insbesondere in einem Kraftfahrzeug,
- mit einem Stellantrieb (7),
- mit einer Kopplungseinrichtung (10), die antriebsseitig mit dem Stellantrieb (7) zur Durchführung bidirektionaler Stellbewegungen gekoppelt ist und die abtriebsseitig zur Kopplung mit dem bidirektional zu betätigenden Stellglied (3) ausgestaltet ist,
- wobei die Kopplungseinrichtung (10) antriebsseitig ein Antriebselement (11) aufweist, das mit dem Stellantrieb (7) gekoppelt ist,
- wobei die Kopplungseinrichtung (10) abtriebsseitig ein Abtriebselement (12) aufweist, das mit dem Stellglied (3) koppelbar ist und das über ein Gelenk (17) mit dem Antriebselement (11) zur Übertragung von Zug- und Druckkräften in einer Längsachse (23) des Abtriebselements (12) gekoppelt ist,
- wobei das Gelenk (17) so ausgestaltet ist, dass es zwischen dem Antriebselement (11) und dem Abtriebselement (12) um eine im Gelenk (17) quer zur Längsachse (23) verlaufende Querachse (26) Schwenkbewegungen (24) und parallel zur Querachse (26) Linearbewegungen (25) ermöglicht,
**dadurch gekennzeichnet,**
**dass** das Gelenk als Zylinderkopfgelenk (17) ausgestaltet ist, dessen Zylinderlängsachse (27) koaxial zur Querachse (26) orientiert ist,
wobei das Zylinderkopfgelenk (17) einen am Abtriebselement (12) oder am Antriebselement (11) ausgebildeten Zylinderkopf (28) aufweist, der in einem am Antriebselement (11) oder am Abtriebselement (12) ausgebildeten Zylinderlager (29) um die Querachse (26) verschwenkbar und in der Querachse (26) verschiebbar gelagert ist.

2. Stellvorrichtung nach Anspruch 1,
**dadurch gekennzeichnet,**
**dass** das Antriebselement (11) zwei Halbschalen (30, 31) aufweist, die jeweils eine Lagerhalbschale (32, 33) umfassen, die zusammen das Zylinderlager (29) bilden.

3. Stellvorrichtung nach Anspruch 2,
**dadurch gekennzeichnet,**
**dass** das Antriebselement (11) eine in das Zylinderlager (29) einmündende, in der Längsrichtung (23) orientierte Durchgangsöffnung (34) aufweist, durch die sich das Abtriebselement (12) ausgehend vom Zylinderkopf (28) in der Längsrichtung erstreckt, wobei die Durchgangsöffnung (34) so dimensioniert ist, dass die Schwenkbewegungen (24) und die Verschiebebewegungen (25) zwischen Antriebselement (11) und Abtriebselement (12) zulässt.

4. Stellvorrichtung nach einem der Ansprüche 1 bis 3,
**dadurch gekennzeichnet,**
**dass** das Antriebselement (11) eine zylindrische Außenkontur (35) aufweist und in einer Lagerbuchse (36) in der Längsachse (37) des Antriebselements (11) bidirektional verstellbar und um die Längsachse (37) des Antriebselements (11) drehbar gelagert ist.

5. Stellvorrichtung nach Anspruch 4,
**dadurch gekennzeichnet,**
**dass** das Antriebselement (11) mit dem Stellantrieb (7) so gekoppelt ist, dass das Antriebselement (11) um seine Längsachse (37) relativ zum Stellantrieb (7) drehbar ist.

6. Stellvorrichtung nach einem der Ansprüche 1 bis 5,
**dadurch gekennzeichnet,**
**dass** das Antriebselement (11) an seinem vom Abtriebselement (12) entfernten Ende ein Axiallager (39) aufweist, an dem sich ein Antriebsglied (15) des Stellantriebs (7) in der Längsachse (37) des Antriebselements (11) und um diese Längsachse (37) drehbar abstützt.

7. Stellvorrichtung nach Anspruch 6,
**dadurch gekennzeichnet,**
**dass** das Axiallager (39) eine am Antriebselement (11) ausgebildete Ringstufe (40) aufweist.

8. Stellvorrichtung nach einem der Ansprüche 1 bis 7,
**dadurch gekennzeichnet,**
**dass** der Stellantrieb (7) einen Antriebsmotor (8) und ein Getriebe (9) aufweist.

9. Stellvorrichtung nach einem der Ansprüche 1 bis 8,
**dadurch gekennzeichnet,**
**dass** der Stellantrieb (7) in einem Gehäuse (42) angeordnet ist, an dem auch die Kopplungseinrichtung (10) verstellbar gelagert ist.

10. Stellvorrichtung zumindest nach Anspruch 1,
**dadurch gekennzeichnet,**
**dass** der Zylinderkopf (28) integral am Abtriebselement (12) ausgeformt ist.

11. Stellvorrichtung zumindest nach Anspruch 1,
**dadurch gekennzeichnet,**
**dass** der Zylinderkopf (28) und das Zylinderlager (29) aus Materialien verschiedener Abriebsfestigkeiten hergestellt sind.

12. Verwendung einer Stellvorrichtung (1) nach einem der Ansprüche 1 bis 11
- zum Betätigen eines Wastegates einer Turbine eines Abgasturboladers, oder
- zum Betätigen einer variablen Geometrie eines Abgasturboladers, oder
- zum Betätigen eines Abgasventils, oder
- zum Betätigen eines Abgasrückführventils, oder
- zum Betätigen eines Frischluftventils, oder
- zum Betätigen einer, insbesondere frischluftseitigen oder abluftseitigen, Klappenanordnung.

13. Brennkraftmaschine, insbesondere in einem Kraftfahrzeug, mit wenigstens einer Stellvorrichtung (1) nach einem der Ansprüche 1 bis 11.

## Claims

1. Control device for bidirectionally actuating an actuator (3), in particular in a motor vehicle, comprising:
- an actuating drive (7);
- a coupling apparatus (10) which is coupled, on the drive side, to the actuating drive (7) for performing bidirectional control movements and is configured, on the output side, for coupling to the actuator (3), which is to be bidirectionally actuated,
- the coupling apparatus (10) having, on the drive side, a drive element (11) coupled to the actuating drive (7),
- the coupling apparatus (10) having, on the output side, an output element (12) which can be coupled to the actuator (3) and is coupled to the drive element (11) via a joint (17) for transferring tensile and compression forces in a longitudinal axis (23) of the output element (12),
- the joint (17) being configured so as to allow both pivot movements (24) between the drive element (11) and the output element (12) about a transverse axis (26) extending in the joint (17) transversely to the longitudinal axis (23) and linear movements (25) in parallel with the transverse axis (26),
**characterised in that**
the joint is formed as a cylinder head joint (17), the cylinder longitudinal axis (27) of which is oriented so as to be coaxial with the longitudinal axis (26),
the cylinder head joint (17) comprising a cylinder head (28) which is formed on either the output element (12) or the drive element (11) and is mounted so as to pivotable about the transverse axis (26) in a cylinder bearing (29) formed on either the drive element (11) or the output element (12), and so as to be displaceable in the transverse axis (26).

2. Control device according to claim 1,
**characterised in that**
the drive element (11) has two half shells (30, 31), which each include one bearing half shell (32, 33) which together form the cylinder bearing (29).

3. Control device according to claim 2,
**characterised in that**
the drive element (11) comprises a through-opening (34) which is oriented in the longitudinal direction (23), and opens out into the cylinder bearing (29), and through which the output element (12) extends from the cylinder head (28) in the longitudinal direction, the through-opening (34) being of such a size as to allow the pivot movements (24) and the displacement movements (25) between the drive element (11) and the output element (12).

4. Control device according to any of claims 1 to 3,
**characterised in that**
the drive element (11) has a cylindrical outer contour (35) and is mounted so as to be bidirectionally displaceable in the longitudinal axis (37) of the drive element (11) in a bearing bush (36) and so as to be rotatable about the longitudinal axis (37) of the drive element (11).

5. Control device according to claim 4,
**characterised in that**
the drive element (11) is coupled to the actuating drive (7) so that the drive element (11) is rotatable about its longitudinal axis (37) relative to the actuating drive (7).

6. Control device according to any of claims 1 to 5,
**characterised in that**
the drive element (11) has, on its end remote from the output element (12), an axial bearing (39) on which a drive member (15) of the actuating drive (7) is supported in the longitudinal axis (37) of the drive element (11) and so as to be rotatable about said longitudinal axis (37).

7. Control device according to claim 6,
**characterised in that**
the axial bearing (39) has an annular step (40) formed on the drive element (11).

8. Control device according to any of claims 1 to 7,
**characterised in that**
the actuating drive (7) has a drive motor (8) and a transmission (9).

9. Control device according to any of claims 1 to 8,
**characterised in that**
the actuating drive (7) is arranged in a housing (42), on which the coupling apparatus (10) is also mounted in a displaceable manner.

10. Control device according to at least claim 1,
**characterised in that**
the cylinder head (28) is integrally moulded on the drive element (12).

11. Control device according to at least claim 1,
**characterised in that**
the cylinder head (28) and the cylinder bearing (29) are made from materials having different abrasion resistances.

12. Use of a control device (1) according to any of claims 1 to 11
- for actuating a wastegate of a turbine of an exhaust gas turbocharger, or
- for actuating a variable geometry of an exhaust gas turbocharger, or
- for actuating an exhaust gas valve, or
- for actuating an exhaust gas recirculation valve, or
- for actuating a fresh air valve, or
- for actuating a flap valve arrangement, in particular an arrangement on the fresh air side or on the exhaust air side.

13. Internal combustion engine, in particular in a motor vehicle, comprising at least one control device (1) according to any of claims 1 to 11.

## Revendications

1. Dispositif de réglage pour l'actionnement bidirectionnel d'un organe de réglage (3), en particulier dans un véhicule automobile,
- avec un servomoteur (7),
- avec un dispositif d'accouplement (10) qui est accouplé, côté entraînement, au servomoteur (7) pour l'exécution de mouvements de réglage bidirectionnels et qui est constitué, côté sortie, pour l'accouplement à l'organe de réglage (3) à actionner de façon bidirectionnelle,
- dans lequel le dispositif d'accouplement (10) présente, côté entraînement, un élément d'entraînement (11) qui est accouplé au servomoteur (7),
- dans lequel le dispositif d'accouplement (10) présente, côté sortie, un élément de sortie (12) qui peut être accouplé à l'organe de réglage (3) et qui est accouplé, par le biais d'une articulation (17), à l'élément d'entraînement (11) pour la transmission de forces de traction et de pression dans un axe longitudinal (23) de l'élément de sortie (12),
- dans lequel l'articulation (17) est constituée de telle sorte que, entre l'élément d'entraînement (11) et l'élément de sortie (12), elle permet des mouvements pivotants (24) autour d'un axe transversal (26) s'étendant dans l'articulation (17) transversalement à l'axe longitudinal (23), et des mouvements linéaires (25) parallèlement à l'axe transversal (26),
**caractérisé en ce que**
l'articulation est constituée en tant qu'articulation de tête de cylindre (17) dont l'axe longitudinal de tête de cylindre (27) est orienté coaxialement à l'axe transversal (26), dans lequel l'articulation de tête de cylindre (17) présente une tête de cylindre (28), constituée sur l'élément de sortie (12) ou sur l'élément d'entraînement (11), qui est supportée de façon pivotante autour de l'axe transversal (26) dans un palier de cylindre (29) constitué sur l'élément d'entraînement (11) ou sur l'élément de sortie (12), et de façon coulissante dans l'axe transversal (26).

2. Dispositif de réglage selon la revendication 1,
**caractérisé en ce que**
l'élément d'entraînement (11) présente deux demi-coques (30, 31) qui comprennent chacune une demi-coque de palier (32, 33) qui forment conjointement le palier de cylindre (29).

3. Dispositif de réglage selon la revendication 2,
**caractérisé en ce que**
l'élément d'entraînement (11) présente une ouverture de passage (34), débouchant dans le palier de cylindre (29), orientée dans la direction longitudinale (23), à travers laquelle s'étend l'élément de sortie (12) à partir de la tête de cylindre (28) dans la direction longitudinale, dans lequel l'ouverture de passage (34) est dimensionnée de telle sorte qu'elle permet les mouvements pivotants (24) et les mouvements coulissants (25) entre l'élément d'entraînement (11) et l'élément de sortie (12).

4. Dispositif de réglage selon l'une des revendications 1 à 3,
**caractérisé en ce que**
l'élément d'entraînement (11) présente un contour extérieur (35) cylindrique et est réglable de façon bidirectionnelle dans un coussinet de palier (36) dans l'axe longitudinal (37) de l'élément d'entraînement (11), et est supporté en rotation autour de l'axe longitudinal (37) de l'élément d'entraînement (11).

5. Dispositif de réglage selon la revendication 4,
**caractérisé en ce que**
l'élément d'entraînement (11) est accouplé au servomoteur (7) de telle sorte que l'élément d'entraînement (11) peut tourner autour de son axe longitudinal (37) par rapport au servomoteur (7).

6. Dispositif de réglage selon l'une des revendications 1 à 5,
**caractérisé en ce que**
l'élément d'entraînement (11) présente à son extrémité éloignée de l'élément de sortie (12) un palier axial (39) sur lequel un organe d'entraînement (15) du servomoteur (7) s'appuie dans l'axe longitudinal (37) de l'élément d'entraînement (11) et en rotation autour de cet axe longitudinal (37).

7. Dispositif de réglage selon la revendication 6,
**caractérisé en ce que**
le palier axial (39) présente un gradin annulaire (40) constitué sur l'élément d'entraînement (11).

8. Dispositif de réglage selon l'une des revendications 1 à 7,
**caractérisé en ce que**
le servomoteur (7) présente un moteur d'entraînement (8) et un engrenage (9).

9. Dispositif de réglage selon l'une des revendications 1 à 8,
**caractérisé en ce que**
le servomoteur (7) est disposé dans un carter (42) sur lequel est également supporté le dispositif d'accouplement (10) de façon réglable.

10. Dispositif de réglage au moins selon la revendication 1,
**caractérisé en ce que**
la tête de cylindre (28) est formée d'un seul tenant sur l'élément de sortie (12).

11. Dispositif de réglage au moins selon la revendication 1,
**caractérisé en ce que**
la tête de cylindre (28) et le palier de cylindre (29) sont fabriqués dans des matériaux de différentes résistances à l'abrasion.

12. Utilisation d'un dispositif de réglage (1) selon l'une des revendications 1 à 11
- pour l'actionnement d'un wastegate d'une turbine d'un turbocompresseur à gaz d'échappement, ou
- pour l'actionnement d'une géométrie variable d'un turbocompresseur à gaz d'échappement, ou
- pour l'actionnement d'une soupape d'échappement, ou
- pour l'actionnement d'une soupape de recirculation des gaz d'échappement, ou
- pour l'actionnement d'une soupape d'air frais, ou
- pour l'actionnement d'un dispositif de clapet, en particulier côté air frais ou côté air d'échappement.

13. Moteur à combustion interne, en particulier dans un véhicule automobile, avec au moins un dispositif de réglage (1) selon l'une des revendications 1 à 11.
